# FASCICULE DE BREVET EUROPEEN

(11) **EP 0 398 815 B1**
(45) Date de publication et mention de la délivrance du brevet: **20.10.1993**
(21) Numéro de dépôt: 90401325.7
(22) Date de dépôt: 18.05.1990
(51) Int. Cl.: B25B 27/30

(54) **Dispositif de montage et démontage de ressorts hélicoidaux**
Vorrichtung zum Ein- und Ausbauen von Spiralfedern
Device for mounting or demounting helical springs

(30) Priorité: 19.05.1989 FR 8906615
(43) Date de publication de la demande: 22.11.1990
(73) Titulaire: MECANIQUE ENERGETIQUE, F-77620 Egreville (FR)
(72) Inventeur: Lambert, Robert, F-77620 Egreville (FR)
(74) Mandataire: Robert, Jean-Pierre

(56) Documents cités:
- EP-A- 0 115 774
- EP-A- 0 250 638
- EP-A- 0 299 880
- DE-A- 2 652 820
- DE-A- 3 021 084
- DE-C- 3 335 979
- FR-A- 2 421 034
- US-A- 4 395 020

## Description

La présente invention concerne un dispositif de montage et démontage de ressorts hélicoïdaux de compression, notamment des ressorts de suspension de véhicules automobiles.

On connait (par exemple du document FR-A- 2421034) des dispositifs pour assurer cette fonction. Ils consistent généralement en un vérin à vis, dans lequel l'écrou est attelé à une griffe ou coupelle de prise d'une spire du ressort, tandis que la vis est immobilisée axialement et tourne dans un tube qui la recouvre en totalité et qui porte à l'une de ses extrémités l'autre coupelle. Un tel dispositif n'est pas bien adapté à la compression ou la décompression d'un ressort. Il est surtout utilisé pour la dépose de la pose d'un ressort sans compression ou décompresion intermédiaire. En outre, il est construit pour une plage relativement restreinte de dimensions longitudinales de ressorts.

On connaît également (par exemple du document DE-A- 30 21 084) un dispositif aussi du genre vérin à vis, qui comporte un écrou solidaire d'un tube qui est télescopiquement rétractable dans un tube extérieur gainant la vis qui coopère avec l'écrou. Les coupelles sont portées, l'une par l'extrémité du tube écrou, et l'autre par le tube extérieur. la coupelle portée par ce tube extérieur est attelable le long du tube au moyen d'un collier de serrage. L'inconvénient de cette fixation réside dans le fait qu'elle est dangereuse parce qu'il n'existe pas de butée positive entre la coupelle et le tube extérieur, d'où des risques de glissement axial et rotatif de cette coupelle, sous l'effet d'un ressort bandé entre les coupelles.

La présente invention entend proposer un appareil qui possède une plus grande plage d'utilisation que ceux du premier type, en ajoutant au dispositifs connus la possibilité de comprimer ou décomprimer un ressort, en une seule opération, et en offrant avec un seul appareil la possibilité d'intervenir sur une gamme de ressorts de dimensions très variées, tout en présentant une grande sécurité de fonctionnement.

A cet effet, l'invention a pour objet un dispositif de montage et démontage de ressorts hélicoïdaux de compression comprenant un vérin dont chacun des éléments intérieur et extérieur, mobiles télescopiquement l'un par rapport à l'autre porte une coupelle déportée par rapport à l'axe de leur déplacement relatif, destinée à être en prise avec une spire du ressort à monter ou démonter, dans lequel selon la caractéristique principale de l'invention, la partie de fixation d'au moins la coupelle destinée à coopérer avec l'élément extérieur comporte une bague fendue dont la section intérieure est sensiblement identique à la section de l'élément extérieur, la largeur de la fente étant inférieure à la plus grande dimension de cette section intérieure mais au moins égale à l'une des dimensions de la section de l'élément intérieur pour que ce dernier puisse passer dans la fente.

Par ailleurs, l'extrémité libre de l'élément intérieur est équipée d'un manchon de section identique à celle de l'élément extérieur, comportant un épaulement d'extrémité et une partie filetée, opposée à cet épaulement, destinée à recevoir un écrou de serrage de la partie de fixation de la bague correspondante.

De manière avantageuse, l'élément extérieur comporte, à son extrémité opposée à la partie externe de l'élément intérieur, un épaulement et à son autre extrémité un écrou de serrage de la partie de fixation de la coupelle correspondante contre l'épaulement par l'intermédiaire d'une pluralité d'entretoises gainant l'élément extérieur, chaque entretoise ayant une longueur au plus égale à la course du vérin, une section interne identique à la section externe de l'élément extérieur et une fente longitudinale de largeur égale à celle de la fente de la partie de fixation de chaque coupelle.

Dans le cas où le manchon porté par l'élément intérieur et l'élément extérieur sont cylindriques, afin d'éviter que les coupelles tournent l'une par rapport à l'autre, ceux-ci comportent des moyens de clavetage de largeur égale à celle de la fente de chaque partie de fixation de coupelle.

Enfin, on notera que chaque coupelle comporte un moyen de détrompage pour sa mise en place, constitué par une saillie à l'intérieur de la bague fendue destinée à être logée dans une rainure longitudinale ménagée sur la surface externe du manchon et de l'élément extérieur du vérin.

L'invention sera mieux comprise au cours de la description donnée ci-après d'un exemple de réalisation qui permettra en outre d'en dégager les avantages et les caractéristiques secondaires.

Il sera fait référence aux dessins annexés dans lesquels:
- la figure 1 est une vue longitudinale en coupe du vérin de l'appareil selon l'invention
- la figure 2 est une représentation schématique d'une coupelle associable au vérin de la figure 1
- la figure 3 est une vue suivant F de la figure 2,
- la figure 4 est une vue axiale d'une entretoise mise en oeuvre dans l'appareil selon l'invention.

Sur ces figures, on a représenté un monte-ressort constitué par un tube 1, à l'extrémité 1a duquel, un bouchon 2 , vissé et goupillé au tube, forme le support d'une vis 3 immobilisée en translation par rapport au tube au moyen de deux butées à billes 4. Un écrou 5 coopère avec la vis 3, à l'intérieur du tube 1. Cet écrou est fixé à un second tube 6, dans un logement intérieur de ce dernier, ce tube 6 étant monté coulissant dans le tube 1. L'arrêt en rotation des deux tubes l'un par rapport à l'autre est assuré par une clavette 7 portée par le tube 1, logée dans une rainure 8 du tube 6.

Le tube 6 est équipé, à son extrémité opposée à l'écrou 5 c'est-à-dire celle qui est constamment à l'extérieur du tube 1, d'un manchon 9 pourvu d'un épaulement d'extrémité 10. Ce manchon est fermement assujetti au tube 6 et son diamètre extérieur D est égal à celui extérieur D du tube 1, si les deux tubes 1 et 6 sont cylindriques. L'invention couvre également une réalisation dans laquelle le tube extérieur 1 est de section carrée. Dans ce cas, il sera avantageux, comme on le verra par la suite, de prévoir un manchon 9 de même section carrée que celle du tube 1 et mutuellement indexées en position angulaire autour de l'axe du vérin.

La vis 3 comporte, à son extrémité interne au tube 6, un épaulement 11 pour interdire un dévissage complet de cette vis par rapport à l'écrou 5, et à son extrémité opposée, extérieure au tube 1, une douille d'entraînement 12 capable de recevoir un outil manuel ou motorisé.

Le tube 1 comporte en outre, à son extrémité voisine des butées à billes 4, un épaulement fixe 13 sur lequel des entretoises 14 peuvent venir en butée lorsqu'elles sont enfilées sur le tube 1. A son autre extrémité, le tube 1 comporte un épaulement mobile 15, contitué ici par un écrou vissé sur l'extrémité du tube filetée à cet effet, que le tube soit de section circulaire ou non.

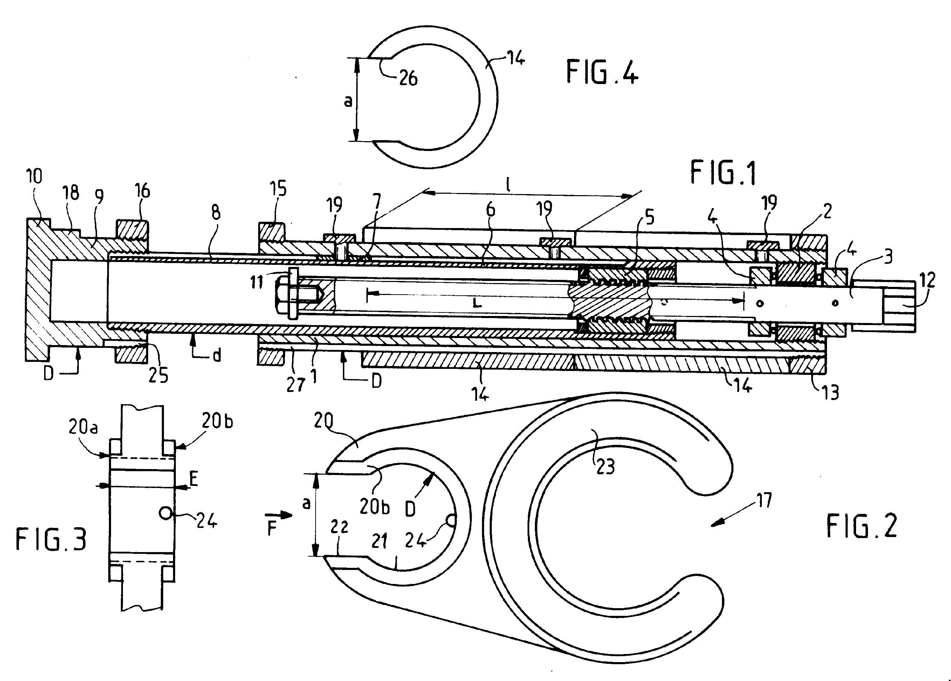

De même, le manchon 9 comporte, à l'opposé de l'épaulement fixe 10, un épaulement mobile 16 (également un écrou) pour appliquer énergiquement contre l'épaulement 10 la partie de fixation de la coupelle 17 de prise du ressort, représentée à la figure 2, et la fixer au tube 6.

Dans le cas où le tube 6 et le manchon 9 sont cylindriques, ils comportent des éléments de clavetage 18 et 19 qui sont longitudinalement alignés au montage du vérin dont on donnera la fonction ci-après. Leur largeur est égale à la dimension a de la coupelle 17 définie ci-après.

A la figure 2, la coupelle 17 comporte une partie de fixation 20, constituée par une bague fendue dont la section interne 21 est identique à la section externe du tube 1 et celle du manchon 9 (ici de diamètre égal à D), et dont la fente 22 est de largeur a au moins égale à une dimension de la section du tube 6 (ici son diamètre d, ce tube 6 étant supposé cylindrique) de manière que le tube 6 puisse pénétrer dans l'espace intérieur de la partie 20 de la coupelle 17. A l'opposé de cette partie 20, la coupelle 17 comporte de manière connue une rampe hélicoïdale 23 avec des rebords, de diamètre et de pente adaptés au ressort que la rampe doit recevoir. La figure 3 fait apparaître l'épaisseur E de la partie 20 de fixation de la coupelle ainsi qu'une saillie 24 tournée vers l'intérieur de la bague fendue et disposée à proximité d'un des bords 20b de la partie 20. Cette saillie 24 est destinée à pénétrer dans une rainure 25 du manchon 9 pour constituer un moyen de détrompage de l'attelage de la coupelle au vérin.

Enfin la figure 4, qui est une vue en bout de l'une des entretoises 14, fait apparaître que ces entretoises sont également fendues, la largeur a de leur fente 26 étant sensiblement égale, comme pour la fente 22 au diamètre d du tube 6. La longueur l de chacune des entretoises 14 sera choisie en fonction des possibilités de règlage dont on désire disposer le long du tube 1 pour fixer la coupelle 17 correspondante. Cette longueur doit de toutes façons être inférieure à la longueur L de la course du vérin diminuée de l'épaisseur de l'écrou 15 pour qu'on puisse effectuer le montage et le démontage de ces entretoises. Dans le cas des figures la longueur de chaque entretoise est égale à la moitié de la distance séparant les épaulements 13 et 15 diminuée de l'épaisseur E d'une coupelle 17, cette longueur étant inférieure à L. Ainsi on peut mettre en place une coupelle 17 soit entre l'épaulement 13 et une entretoise 14, soit entre les deux entretoises 14, soit entre une entretoise 14 et l'épaulement 15. Pour multiplier les emplacements, il suffit de multiplier le nombre des entretoises. Dans le cas où, comme dans la figure 1, les éléments de clavetage 19 sont séparés, il faut qu'ils soient disposés aux endroits le long du tube 1 où la coupelle s'implantera ( 3 pour la figure 1). Bien entendu, ces éléments de clavetage pourront consister en une clavette continue le long du tube 1.

Le montage des coupelles sur le vérin s'opère de la manière suivante. On commence, par exemple, par dévisser l'écrou 16 du manchon 9 et le placer contre l'extrémité du tube 1, après avoir sorti le tube 6 du tube 1 d'une longueur au moins égale à l'épaisseur E de la coupelle 17, augmentée de l'épaisseur de l'écrou 16. Il est alors possible d'introduire la coupelle 17 latéralement sur le tube 6 et de la déplacer axialement en direction de l'épaulement 10, en logeant la clavette 18 dans la fente 22 de la coupelle. Si la coupelle n'est pas correctement orientée, c'est-à-dire si la face creuse de la rampe hélicoïdale n'est pas tournée du coté du tube 1, la saillie 24 viendra buter au fond de la rainure 25 alors que l'épaisseur E de la coupelle recouvrira le filetage de vissage de l'épaulement 16 qui ne pourra donc pas être mis en place pour serrer la coupelle. La coupelle retournée, le serrage sera devenu possible car la saillie 24 ne pénètrera qu'en dernier dans la rainure 25, l'épaisseur E étant située au-delà du filetage.

On procède de la même manière pour la mise en place de la coupelle sur le tube 1, après avoir placé les entretoises 14 en nombre suffisant entre l'épaulement 13 et la coupelle, en fonction de la position désirée. La mise en place des entretoises se fait de la même manière que celle de la coupelle, après avoir dévissé l'écrou 15, l'avoir déplacé en direction du manchon 9 et avoir sorti une longueur suffisante de tube 6 du tube 1.

Dans le cas de la figure, si on veut utiliser les mêmes coupelles 17 du coté du tube 6 et du coté du tube 1, on aura prévu le long de la génératrice de ce tube 1 opposée aux clavettes 19, une rainure continue 27 pour accueillir la saillie 24 de la coupelle. Il faudra alors que l'opérateur veille à l'orientation de cette coupelle par rapport au vérin. Dans une variante non-représentée, la saillie 24 de la coupelle, au lieu d'être strictement en face de la fente 22 est décalée angulairement par rapport à ce plan de symétrie que constitue le plan médian de la fente 22. Dans ce cas les rainures 25 et 27 seront le long de génératrices symériques par rapport au plan contenant les clavettes, si bien qu'un retournement de la coupelle sera nécessaire pour passer d'une fixation à l'autre et les orientations seront obligatoirement respectées.

L'invention ici décrite dans un mode de réalisation à vérin à vis, trouve une application dans tout type de vérin pneumatique ou hydraulique dans lequel la tige est immobilisée en rotation par rapport au corps de vérin.

On comprend qu'en plaçant la coupelle règlable à proximité de l'épaulement fixe 13, on dispose de l'écartement maximum des coupelles, si bien que l'on peut saisir un ressort à l'état libre par ses spires extrèmes et le comprimer, en actionnant la rentrée du tube 6 dans le tube 1. Dans la même position de fixation des coupelles, on peut procéder à l'opération inverse pour décomprimer un ressort. Les autres positions de fixation des coupelles seront de préférence utilisées pour le montage et le démontage des ressorts sans décompression intermédiaire. Enfin l'invention permet d'adapter l'appareil rapidement aux différentes dimensions de ressort, car ceux-ci ayant en général un diamètre en relation avec la longueur, lors d'un changement de coupelles imposé par un changement de diamètre, il est très simple de modifier leur place relative, sans nécessité de recourir à un autre appareil.

Il est bien entendu que l'invention concerne également des vérins dans lequels les tubes mis en oeuvre sont de section, par exemple polygonale, ce qui évite de mettre en place des éléments de clavetage pour les immobilisation relatives en rotation, cette immobilisation étant obtenue par la complémentarité des sections.

## Revendications

1. Dispositif de montage et démontage de ressorts hélicoïdaux de compression comprenant un vérin dont chacun des éléments intérieur (6) et extérieur (1) mobiles télescopiquement l'un par rapport à l'autre porte une coupelle (17) déportée par rapport à l'axe de leur déplacement relatif, destinée à être en prise avec une spire du ressort à monter ou démonter, caractérisé en ce que la partie de fixation (20) d'au moins la coupelle (17) destinée à coopérer avec l'élément extérieur (1) comporte une bague fendue dont la section intérieure (D) est sensiblement identique à la section de l'élément extérieur (1), la largeur de la fente (22) étant inférieure à la plus grande dimension de cette section intérieure (D) mais au moins égale à l'une des dimensions (d) de la section de l'élément intérieur (6) pour que ce dernier puisse passer dans la fente (22).

2. Dispositif selon la revendication 1, caractérisé en ce que l'extrémité libre de l'élément intérieur (6) est équipé d'un manchon (9) de section identique à celle de l'élément extérieur (1) comportant un épaulement d'extrémité (10) et une partie filetée, opposée à cet épaulement destinée à recevoir un écrou (16) de serrage de la partie de fixation (20) de la bague correspondante.

3. Dispositif selon l'une quelconque des revendications 1 et 2 caractérisé en ce que l'élément extérieur (1) comporte, à son extrémité opposée à la partie externe de l'élément intérieur (6), un épaulement (13) et à son autre extrémité un écrou (15) de serrage de la partie de fixation de la coupelle correspondante contre l'épaulement par l'intermédiaire d'une pluralité d'entretoises (14) amovibles gainant l'élément extérieur (1), chaque entretoise ayant une longueur au plus égale à la course du vérin, une section interne (D) identique à la section externe (D) de l'élément extérieur(1) et une fente longitudinale (26) de largeur égale (a) à celle de la fente (22) de la partie de fixation de chaque coupelle.

4. Dispositif selon l'une quelconque des revendications 1 à 3, caractérisé en ce que le manchon (9) porté par l'élément intérieur (6) et l'élément extérieur (1) étant cylindriques, ceux-ci comportent des moyens de clavetage (18,19) de largeur égale à celle (a) de la fente (22) de chaque partie de fixation de coupelle.

5. Dispositif selon l'une quelconque des revendications 1 à 4, caractérisé en ce chaque coupelle comporte un moyen de détrompage constitué par une saillie (24) à l'intérieur de la bague fendue destinée à être logée dans une rainure (25,27) longitudinale ménagée sur la surface externe du manchon (9) et de l'élément extérieur (1) du vérin.

6. Dispositif selon la revendication 5 caractérisé en ce que les coupelles d'une paire sont identiques tandis que la rainure ménagée dans la surface du manchon est dans une position symétrique de celle ménagée dans l'élément extérieur, par rapport au plan médian des moyens de clavette (18,19) passant par l'axe du vérin.

7. Dispositif selon l'une quelconque des revendications précédentes, caractérisé en ce que le vérin est un vérin à vis, comprenant un premier tube (1) comme élément extérieur à une extrémité duquel une vis (3) interne est immobilisée axialement, un écrou (5) solidaire de l'extrémité d'un second tube (6) coopérant avec cette vis, ce second tube étant arrèté en rotation par rapport au premier au moyen d'une clavette (7) entre les deux tubes.

## Patentansprüche

1. Vorrichtung zum Ein- und Ausbau von Schraubendruckfedern, umfassend einen Arbeitszylinder, bei dem sowohl das innere (6) als auch das äußere (1) der relativ zueinander teleskopisch bewegbaren Elemente einen Federteller (17) trägt, der außerhalb der Achse ihrer Relativbewegung liegt und dazu bestimmt ist, mit einer Windung einer ein- oder auszubauenden Feder in Eingriff zu treten, **dadurch gekenn****zeichnet,** daß der Befestigungsabschnitt (20) mindestens des Federtellers (17), der zum Zusammenwirken mit dem äußeren Element (1) bestimmt ist, einen mit einem Spalt versehenen Ring umfaßt, dessen Innenquerschnitt (D) im wesentlichen gleich dem Querschnitt des äußeren Elementes ist, wobei die Breite des Spaltes (22) geringer als die größte Abmessung dieses Innenquerschnittes (D), aber mindestens gleich einer der Abmessungen (d) des Querschnittes des inneren Elementes (6) ist, damit letzteres durch den Spalt (22) hindurchtreten kann.

2. Vorrichtung nach Anspruch 1, **dadurch gekennzeich****net,** daß das freie Ende des inneren Elementes (6) mit einer Hülse (9) versehen ist, deren Querschnitt gleich dem Querschnitt des äußeren Elementes (1) ist und einen Endbund (10) und einen diesem entgegengesetzten Gewindeabschnitt umfaßt, der dazu bestimmt ist, eine Mutter (16) zum Einspannen des Befestigungsabschnittes (20) des entsprechenden Ringes aufzunehmen.

3. Vorrichtung nach Anspruch 1 oder 2, **dadurch gekenn****zeichnet,** daß das äußere Element (1) an seinem dem äußeren Abschnitt des inneren Elementes (6) entgegengesetzten Ende einen Bund (13) und an seinem anderen Ende eine Mutter (15) hat, um den Befestigungsabschnitt des entsprechenden Federtellers über eine Mehrzahl von das äußere Element (1) abnehmbar umgebenden Distanzhülsen (14) gegen den Bund zu spannen, wobei jede Distanzhülse eine Länge hat, die mindestens gleich dem Hub des Arbeitszylinders ist, einen Innenquerschnitt (D) hat, der identisch mit dem Außenquerschnitt (D) des äußeren Elementes (1) ist, und einen Längsspalt (26) hat, dessen Breite (a) gleich der des Spaltes (22) des Befestigungsabschnittes jedes Federtellers ist.

4. Vorrichtung nach einem der Ansprüche 1 bis 3, **da****durch gekennzeichnet,** daß die Hülse (9) an dem inneren Element (6) und das äußere Element (1) zylindrisch sind und Keilverbindungsmittel (18, 19) haben, deren Breite gleich der Breite (a) des Spaltes (22) jedes Federtellerbefestigungsabschnittes ist.

5. Vorrichtung nach einem der Ansprüche 1 bis 4, **da****durch gekennzeichnet,** daß jeder Federteller eine Unverwechselbarkeitseinrichtung umfaßt, die von einem Vorsprung (24) an der Innenseite des mit einem Spalt versehenen Ringes gebildet ist, welcher Vorsprung (24) zum Eingriff in eine Längsnut (25, 27) bestimmt ist, die in der Außenfläche der Hülse (9) und des äußeren Elementes (1) des Arbeitszylinders ausgebildet ist.

6. Vorrichtung nach Anspruch 5, **dadurch gekennzeich****net,** daß die Federteller eines Paares identisch sind, während die in der Oberfläche der Hülse ausgebildete Nut in einer Position vorgesehen ist, die symmetrisch zu der in dem äußeren Element ausgebildeten Nut bezüglich einer durch die Achse des Arbeitszylinders verlaufenden Mittelebene der Keilverbindungsmittel (18, 19) ist.

7. Vorrichtung nach einem der vorhergehenden Ansprüche, **dadurch gekennzeichnet,** daß der Arbeitszylinder ein Arbeitszylinder mit Schraubspindelantrieb ist, umfassend ein erstes Rohr (1) als äußeres Element, an dessen einem Ende eine Innenspindel (3) axial festgelegt ist, eine Mutter (5), die fest mit dem Ende eines zweiten Rohres (6) verbunden ist und mit dieser Spindel zusammenwirkt, wobei das zweite Rohr gegenüber einer Drehung relativ zum ersten Rohr mittels einer Keilverbindung (7) zwischen den beiden Rohren festgelegt ist.

## Claims

1. A device for fitting and removing coil compression springs comprising a jack in which each of the inner (6) and outer (1) elements which are movable telescopically relative to each other carries a cup (17) which is offset with respect to the axis of their relative displacement and which is intended to be engaged with a turn of the spring to be fitted or removed, characterised in that the fixing portion (20) of at least the cup (17) which is intended to cooperate with the outer element (1) comprises a split ring whose internal section (D) is substantially identical to the section of the outer element (1), the width of the slot (22) being less than the largest dimension of said internal section (D) but at least equal to one of the dimensions (d) of the section of the inner element (6) so that the latter can pass into the slot (22).

2. A device according to claim 1 characterised in that the free end of the inner element (6) is provided with a sleeve (9) of identical section to that of the outer element (1) comprising an end shoulder (10) and a screwthreaded portion opposite to said shoulder and intended to receive a nut (16) for clamping the fixing portion (20) of the corresponding ring.

3. A device according to either one of claims 1 and 2 characterised in that the outer element (1) comprises a shoulder (13) at its end opposite to the external portion of the inner element (6) and at its other end it has a nut (15) for clamping the fixing portion of the corresponding cup against the shoulder by way of a plurality of removable brace members (14) encasing the outer element (1), each brace member being of a length which is at most equal to the travel motion of the jack and being of an internal section (D) which is identical to the external section (D) of the outer element (1) and having a longitudinal slot (26) of a width (a) equal to that of the slot (22) in the fixing portion of each cup.

4. A device according to any one of claims 1 to 3 characterised in that, the sleeve (9) which is carried by the inner element (6), and the outer element (1), being cylindrical, they comprise keying means (18, 19) of a width equal to the width (a) of the slot (22) in each cup fixing portion.

5. A device according to any one of claims 1 to 4 characterised in that each cup comprises a means for ensuring proper fitting which is formed by a projection (24) in the interior of the split ring and intended to be accommodated in a longitudinal groove (25, 27) provided in the external surface of the sleeve (9) and the outer element (1) of the jack.

6. A device according to claim 5 characterised in that the cups of a pair are identical while the groove provided in the surface of the sleeve is in a position which is symmetrical with that provided in the outer element relative to the central plane of the keying means (18, 19) passing through the axis of the jack.

7. A device according to any one of the preceding claims characterised in that the jack is a screw jack comprising a first tube (1) as the outer element, at one end of which an internal screw (3) is axially immobilised, and a nut (5) which is fixed to the end of a second tube (6) and co-operating with said screw, said second tube being arrested in respect of rotary movement with respect to the first tube by means of a key (7) between the two tubes.
